# EUROPEAN PATENT SPECIFICATION

(11) **EP 3 789 353 B1**
(45) Date of publication and mention of the grant of the patent: **22.06.2022**
(21) Application number: 20192665.6
(22) Date of filing: 25.08.2020
(51) Int. Cl.: C02F 9/00, C02F 1/36, C02F 1/52, C02F 1/56, C02F 1/66, C02F 3/32, C02F 103/00

(54) **ECOLOGICAL REMEDIATION METHOD FOR WATER BODIES RICH IN HIGH-TURBIDITY COLLOIDAL PARTICLES**
VERFAHREN ZUM ÖKOLOGISCHEN SANIEREN VON GEWÄSSERN, DIE REICH AN HOCHTRÜBEN KOLLOIDALEN TEILCHEN SIND
PROCÉDÉ D'ASSAINISSEMENT ÉCOLOGIQUE DE PLANS D'EAU RICHES EN PARTICULES COLLOÏDALES À FORTE TURBIDITÉ

(30) Priority: 09.09.2019 CN 201910865924
(43) Date of publication of application: 10.03.2021
(73) Proprietor: NANJING INSTITUTE OF GEOGRAPHY & LIMNOLOGY. CHINESE ACADEMY OF SCIENCES, Nanjing, Jiangsu 210008 (CN)
(72) Inventor: GU, Xiaozhi, Nanjing, Jiangsu 210008 (CN); CHEN, Kaining, Nanjing, Jiangsu 210008 (CN); MA, Shuzhan, Nanjing, Jiangsu 210008 (CN)
(74) Representative: Proi World Intellectual Property GmbH

(56) References cited:
- CN-A- 106 976 995
- CN-A- 108 192 638
- US-A1- 2019 194 044

## Description

### Field of the Invention

The Invention belongs to the field of environmental protection technology, and relates to a remediation method for improving water quality of the high-turbidity water bodies and particularly to a method for rapidly improving water quality of urban rivers or small urban lakes and reservoirs.

### Background of the Invention

Suspended particulate matters in water, especially fine particulate matter, silty clay and colloidal matter of organic particulate matter, are easily suspended in water due to their small particle size and light specific gravity, or slowly settle in the bottom of water in a short term. However, resuspension process is extremely likely to occur under the disturbance of water flow, wind waves and even benthic organisms, which accelerates the turbidity of water again in turn. For turbid water bodies, the remediation technologies at present mainly include the flocculation, clean water replenishment, aeration and other measures. Though some of them may increase water transparency to some extent in a short period of time, there are problems of cost effectiveness. For example, flocculant dosing can rapidly improve water transparency in the short term, but frequent dosing of flocculants after a short-term decline of turbidity may lead to secondary pollution in the water. In addition, clean water replenishment seems to be an effective method when there are clean water sources. Nevertheless, according to the Water Resources Survey Communique in 2016, the number of nutrient-rich lakes in China accounts for 78.6%, and the proportion of surface river water under V-class and inferior V-class in China accounts for about 15%, all of which are turbid to a certain degree. As the cost of ecological water replenishment from clean water sources is high, which is impracticable in many places, aeration can be adopted to inhibit algae breeding in water bodies and reduce concentration of suspended matter in water bodies to a certain extent. However, the existing technologies are still deficient in overcoming the technical difficulties in providing a continuous solution to water turbidity on a long-term and low-cost basis.

### CHINESE ACADEMY OF SCIENCES

US 2019/194044 A1 relates to a method for harmless treatment of cyanophytes and suspended solids accumulated in lakeside wetlands. CN108192638A relates to a soil remediation agent used for heavy metal pollution and a preparation method thereof. CN106976995A relates to a river channel sewage treating agent and a preparation method thereof.

### Summary of the Invention

In view of the problems of the above-mentioned prior art, the Invention provides, in accordance with independent claim 1, a remediation method for water bodies rich in high-turbidity colloidal particles. The said remediation method can be applied in urban river courses, small reservoirs, ponds and other high-turbidity water bodies rich in colloidal silty particles and algae, so as to improve water quality and realize the long-term remediation by improving the transparency of turbid water in a quick, continuous and effective manner.

The essential features of the invention are comprised in independent method claim 1. Further, preferred embodiments are described in dependent claims 1-10.

An ecological remediation method for water bodies rich in high-turbidity colloidal particles, characterized by comprising the following steps:
Spreading a composite flocculant on a water surface after its preparation which is performed by the following method:
Perform the ultrasonic treatment on the mixed solution of starch, dimethyl diallyl ammonium chloride and NaOH, then mix and stir it evenly with acidified chitosan to acquire the cationic starch flocculant, and blend the said cationic starch flocculant with diatomite to prepare the said composite flocculant; the mass ratio of cationic starch flocculant and diatomite thereof is 0.5-1.5:1, preferably 0.9-1.2:1;
(2) When the water transparency is greater than or equal to 60 cm after flocculation and sedimentation, add clay minerals to the water body for formation of a thin overlaying layer;
(3) After formation of a thin overlaying layer, transplant the submerged plant turf as a whole underwater, so as to restore the submerged plant community; wherein the submerged plant turf is grown separately and then transplanted to the water body.
In Step (1), the said ultrasonic treatment is performed with 20 kHZ ultrasonic wave for 3-10 min;
Preferably, Step (1) also includes insulation, washing and drying of the cationic starch flocculant;
Preferably, the said insulation is to keep warm 30-50 min at 50-60 °C;
Preferably, the said washing is to wash with 80% ethanol solution;
In Step (1), the mole percentage of NaOH and Dimethyl Diallyl Ammonium Chloride is 1.2-1.6:1;
In Step (1), the mass ratio of starch in mixed solution is 30%-60%, preferably 50%;
In Step (1), the chitosan is prepared into a solution with a mass ratio of 10-15 %;
In Step (1), the mass ratio of chitosan and starch is 0.005-0.045:1, preferably 0.035:1;
Preferably, the stirring style said in Step (1) is to stir with a stretched stirring rod;
More preferably, the mixing head of the stretched stirring rod is put underwater at a depth of 30-50 cm with a stirring rate of 500-2000 RPM, preferably 800-1000 RPM;
Preferably, the clay mineral said in Step (2) is prepared as follows:
   Remove the impurities from silty and clay soil in the local farmland and crush that soil, select crushed soil of 40-60 mesh, then remove the suspended impurities after washing. The soil deposited in the lower layer is the said clay mineral;
   Preferably, the method of adding clay minerals to water bodies said in Step (2) is to take high-pressure spraying of the mixture of the said clay mineral and muddy/water at a volume ratio of 1:8-25, with nozzles installed underwater 50-80 cm away from the bottom for carpet spraying at a forward speed of 8-14 m/min and with the spraying speed of 20-550 L/min.
   Preferably, the submerged plant turf said in Step (3) is prepared as follows: directly seed the propagules of submerged plants on the three-dimensional plant fiber network in the clean water, and fill the shale particle fillers on the three-dimensional plant fiber network at a filling volume radio of 30%, and cultivate them for 30 days. The water depth of the said clean water is 30-50 cm, the transparency is greater than or equal to 30 cm, and the temperature is greater than or equal to 15 °C;
   Preferably, after the transplantation in Step (3), the submerged plant turf is fixed underwater with timber piles;
   Preferably, the submerged plant turf said in Step (3) is laid in a water area where the transparency is greater than or equal to 50 cm, and the water depth is 80-120 cm underwater;
   For water area with a depth of more than 120 cm, the said submerged plant is suspended in the water with timber piles as its support, and the turf location can be adjusted freely based on the actual condition;
   Preferably, the said submerged plant is *Hydrilla verticillata (L.f.) Royle, Myriophyllum verticillatum L.* or *Potamogeton malainus Miq.;*
   Preferably, the propagule of the submerged plant is the underground stem, seed or seedling of the submerged plant with spores.
   Preferably, the pore size of three-dimensional plant fiber network is 0.5-1 mm;
   Preferably, the said three-dimensional plant fiber network has three layers;
   Preferably, the particle size of the shale particle fillers is 0.5-2 cm, the true density is 1.5-1.7 g/cm³, the bulk density is 550-600 g/cm³, and the filling thickness is greater than or equal to 2 cm;
   Preferably, the height of the timber piles is 30 cm above the mud-water interface;
   Preferably, the said submerged plant turf is a modular turf; the length of the modular turf is 1.5-3 m and the width of that is 5-10 m;
   Currently, technical difficulties in improving transparency of turbid water bodies are as follows: the difficulty to solve the problems of quick effect just in a short time and easy resuspension of flocs after sedimentation which results in the decline of transparency of water bodies again; the difficulty to realize the unity of opposites of short-term effectiveness and long-term transparency of water bodies; the difficulty to make use of the efficient and ecologically safe flocculants without causing secondary pollution.

In view of the above-mentioned technical difficulties in improving transparency of turbid water bodies, the technical scheme provided by the Invention obviously has the following technical advantages and distinct technical progressiveness:
(1) In view of the difficulty to solve the problems of quick effect just in a short time and easy resuspension of flocs after sedimentation which results in the decline of transparency of water bodies again,
   The technical scheme provided by the Invention adopts polymer flocculant to form large flocs and a thin overlaying layer, together with the help of submerged plant turf, thus creating a triple protection to ensure the reduction of secondary resuspension of colloidal particles after water flocculation. Firstly, the compound flocculant of macromolecules is used for efficient flocculation of colloidal body and algal cells, for this flocculant has a good flocculation effect and is easy to form flocs of large particle size with a small dosage, so as to accelerate the rate of flocculation and sedimentation in the water body. Compared with ordinary cationic starch flocculant and its compound flocculant, the major treatment objects of the above flocculant are water fiber, fillers, minerals, microorganisms and sludge and other particles of large particle size. The composite flocculant prepared by the technical scheme of the Invention has a good flocculation effect for fine colloidal particles; the removal rate of flocculation of the composite flocculant against fine colloidal particles is 80%, which is far higher than the flocculation effect of cationic starch commonly used at present. For the general large particle material filler, minerals, microorganisms and sludge and algae, the removal rate is greater than 80%. The composite flocculant, compounded with diatomite and cationic starch, solves the problem of slow sedimentation of flocs, and is particularly applicable to the water bodies in ordinary rivers with a certain flow rate, which require fast sedimentation. With the characteristics of large flocs and high bonding strength, it can prevent the flocs from being broken again and suspended again after sedimentation. The Invention is mainly focused on solving the above problems.
   The invention adopts the underwater overlaying technology of thin clay to suppress the flocs after flocculation for a second time, so as to prevent the secondary suspension from increasing the turbidity of the water body; to conclude, 3D plant network coupled with submerged plant turf is planted on the overlying layer, so that the dense roots of 3D plant network and submerged plant could fundamentally inhibit and fix the flocculated particles without release and suspension again.
(2) In view of the difficulty to realize the unity of opposites of short-term effectiveness and long-term transparency of water bodies, the Invention, by taking advantage of the ecological control method, improves water transparency by virtue of physical flocculation in a short term, makes use of water habitat to optimize clearance, rapidly engrafts submerged plant turf, and finally, maintains the transparency underwater effectively and sustainably by utilizing the leaf surface adsorption of underwater forest plant formed by the submerged plant community and the cutting flow rate of submerged plants.
(3) In view of the difficulty to make use of the efficient and ecologically safe flocculants without causing secondary pollution, the Invention adopts natural starch-based substance as the key flocculant, mainly composed of polysaccharide substance, whose dosage is relatively small, with a total amount of less than 0.1% and which mainly becomes glucose after self-degradation in water bodies that can be used by submerged plants without causing serious secondary pollution; in the later stage, the 3D plant network and other materials used are all self-biodegradable materials, which can reduce the ecological security risk of water remediation and reduce the dependence on plastics and other chemicals.

The advantages of the invention are as follows:
(1) The technical process involved in the Invention is relatively simply with strong operability, so that it can be applied to ordinary rivers or small ponds or park reservoirs or artificial lakes, thus improving the water quality and landscape effect;
(2) The remediation materials involved in the Invention such as local soil, submerged plant turf and starch, are all eco-friendly materials with low price and wide source, which are suitable for being applied to and promoted in the ecological engineering practice for water remediation;
(3) The technical scheme provided by the invention makes full use of the self-regulating function of the river ecosystem and reduces the frequency and intensity of man-made interference. Through the adjustment of the composition structure in the ecosystem, the window period of habitat remediation can be narrowed with the rapid improvement of water transparency of water bodies in a very short period of time, the underwater forest can be formed with the help of submerged plant turf at last, thus the long-term improvement of water transparency can be realized.

### Description of the Drawings

Fig. 1 is a dynamic comparison diagram of turbidity changes before and after treatment of suspended particulate matters in Embodiment 1 of the Invention;
Fig. 2 is a dynamic comparison diagram of turbidity changes before and after treatment of suspended particulate matters in Embodiment 1 of the Invention; different letters in plots are significantly different as determined by the least significant difference comparison of turbidity means during the monitoring period of 60 days (P<0.05);
Fig. 3 is a dynamic comparison diagram of removal rate of colloidal suspended matters in water body before and after treatment of suspended particulate matters in Embodiment 1 of the Invention;
Fig. 4 is a dynamic comparison diagram of removal rate of colloidal suspended matters in water body before and after treatment of suspended particulate matters in Embodiment 1 of the Invention; different letters in plots are significantly different as determined by the least significant difference comparison of turbidity means during the monitoring period of 60 days (P<0.05);
Fig. 5 is a dynamic comparison diagram of turbidity changes before and after treatment of suspended particulate matters in Embodiment 2 of the Invention;
Fig. 6 is a dynamic comparison diagram of turbidity changes before and after treatment of suspended particulate matters in Embodiment 2 of the Invention; different letters in plots are significantly different as determined by the least significant difference comparison of turbidity means during the monitoring period of 60 days (P<0.05);
Fig. 7 is a dynamic comparison diagram of removal rate of colloidal suspended matters in water body before and after treatment of suspended particulate matters in Embodiment 2 of the Invention.
Fig. 8 is a dynamic comparison diagram of removal rate of colloidal suspended matters in water body before and after treatment of suspended particulate matters in Embodiment 2 of the Invention; different letters in plots are significantly different as determined by the least significant difference comparison of turbidity means during the monitoring period of 60 days (P<0.05);
Fig. 9 is a dynamic comparison diagram of turbidity changes before and after treatment of suspended particulate matters in Embodiment 3 of the Invention;
Fig. 10 is a dynamic comparison diagram of turbidity changes before and after treatment of suspended particulate matters in Embodiment 3 of the Invention; different letters in plots are significantly different as determined by the least significant difference comparison of turbidity means during the monitoring period of 60 days (P<0.05);
Fig. 11 is a dynamic comparison diagram of removal rate of colloidal suspended matters in water body before and after treatment of suspended particulate matters in Embodiment 3 of the Invention,
Fig. 12 is a dynamic comparison diagram of removal rate of colloidal suspended matters in water body before and after treatment of suspended particulate matters in Embodiment 3 of the Invention; different letters in plots are significantly different as determined by the least significant difference comparison of turbidity means during the monitoring period of 60 days (P<0.05);
Fig. 13 is a dynamic comparison diagram of turbidity changes before and after treatment of suspended particulate matters in Embodiment 4 of the Invention;
Fig. 14 is a dynamic comparison diagram of turbidity changes before and after treatment of suspended particulate matters in Embodiment 4 of the Invention; different letters in plots are significantly different as determined by the least significant difference comparison of turbidity means during the monitoring period of 60 days (P<0.05).
Fig. 15 is a dynamic comparison diagram of removal rate of colloidal suspended matters in water body before and after treatment of suspended particulate matters in Embodiment 4 of the Invention.
Fig. 16 is a dynamic comparison diagram of removal rate of colloidal suspended matters in water body before and after treatment of suspended particulate matters in Embodiment 4 of the Invention; different letters in plots are significantly different as determined by the least significant difference comparison of turbidity means during the monitoring period of 60 days (P<0.05).

### Description of the Preferred Embodiments of the Invention

The technical scheme of the Invention is further described in combination with Embodiments and Drawings as follows. The protection scope of the Invention is not limited by the Embodiments, but by the Claims.

### Embodiment 1

Aiming at improving the high-turbidity water due to the fine particle colloids in water bodies, the technical scheme provided by the Invention adopts field spraying to reduce the concentration of colloidal particles in water bodies, significantly improve water transparency in a short term, and keep a long-term clarification for water bodies by combining with the remediation of submerged plant turf in the later stage.

The embodiment is as follows:
1) The water of a park in Huzhou City, Zhejiang Province of China, is turbid with gray and dark yellow color. The fluidity of water body is low, the transparency is 20-30 cm and the turbidity is 80-120 NTU.

Firstly, prepare the compound flocculant for the water body. Perform ultrasonic treatment on the mixed solution of starch, dimethyl diallyl ammonium chloride solution and NaOH (in which the mass ratio of starch is 50%, and the mole percentage of NaOH and dimethyl diallyl ammonium chloride is 1.2:1) with 20 kHZ ultrasonic wave for 3-10 min, then mix and stir it evenly with acidified chitosan for complete reaction, and wash with 80% ethanol solution and dry it after keeping it 50-60°C for 30-50 min to obtain the cationic starch flocculant, where the mass ratio of chitosan and starch is 0.035:1; then blend the cationic starch flocculant and the diatomite with a mass ratio of 0.9:1 to get the compound flocculant, then spray it with a dosage of 0.1%. After that, stir the water with a stretched stirring rod at the underwater depth of 30-50 cm at a stirring speed of 800 RPM. The water body will be clarified quickly in 2h. When the water transparency is greater than or equal to 60 cm, the local soil, specifically, the soil of 40 meshes, should be used to overlay the water with a thin layer. After washing, the impurities are removed, and then high-pressure spraying is carried out for underwater overlaying with muddy/water at a volume ratio of 1:8 and with a spraying speed of 20 L/min. The spraying is carried out to install the nozzles underwater for carpet spraying at a forward speed of 8-14 m/min. The underwater nozzles should be 80 cm away from the bottom.

2) Engraft the submerged plant turf the next day after spraying. Firstly, culture the seedlings of submerged plant such as *Hydrilla verticillata (L.f.) Royle* and *Myriophyllum verticillatum L.* and so on in clean water, with water depth of 30-50 cm, transparency of more than 30 cm and temperature of greater than or equal to 15°C, directly sow the submerged plant propagules (i.e. rhizomes, seeds or seedlings with spore) on the 3D plant fiber network (the pore size of that is 0.5-1 mm), and fill it with shale particles based on 30% of the filling volume (the particle size is 0.5-2 cm, the true density is 1.5-1.7 g/cm3, the bulk density is 550-600 g/cm3, and the filling thickness is greater than or equal to 2 cm). The three-dimensional network should be installed underwater in a modular manner. After 30 days of culture, transplant the whole plant when the average height is 20 cm, and fix the planted submerged plant turf to the bottom with timber piles, the height of which should be 30 cm higher than the muddy-water interface. The submerged plant turf should be located at the water area with a transparency of over 50 cm and a depth of 80 cm below the water surface. When the submerged plant turf is laid, its module should be put together based on a unit of 1.5m×10m to initially form an underwater forest. After 60 days, the submerged plant community in the water can be initially restored.

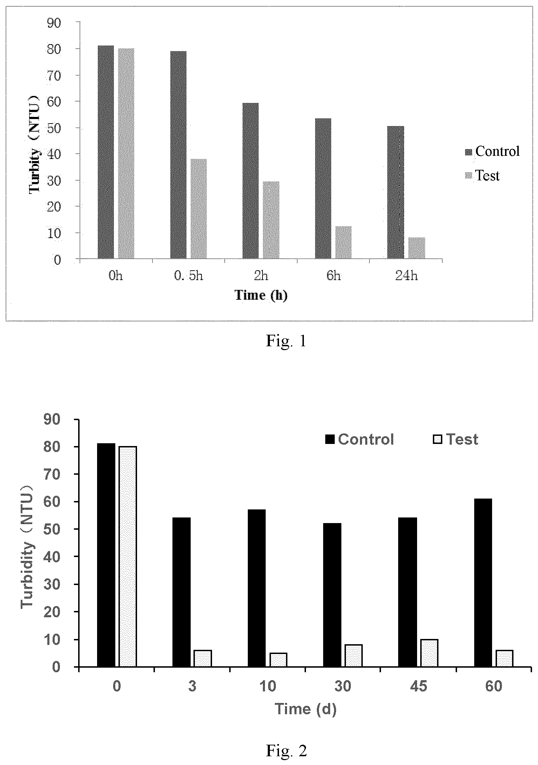

Once the system is stable after running for a period of time, a 2-month continuous monitoring should be carried out towards the water body; it is showed that the water turbidity decreases significantly, and the transparency of the water body is significantly higher than that of the control group; in particular, for the relatively static water area, the removal rate of suspended colloid in the water is 90% on average after stabilization for 24 hours, as shown in Fig. 1-4. After continuous testing for two months, it is discovered that the submerged plant turf underwater is initially restored, for the overlaying of aquatic grass is more than 60%, the transparency of the water body is stable at 55 cm on average, and the concentration of suspended matters in the water is less than 20 NTU, meaning that the water quality around the aquatic plant is significantly improved.

### Embodiment 2

Aiming at improving the high-turbidity water due to the fine particle colloids in water bodies, the technical scheme provided by the Invention adopts field spraying to reduce the concentration of colloidal particles in water bodies, significantly improve water transparency in a short term, and keep a long-term clarification for water bodies by combining with the remediation of submerged plant turf in the later stage.

The embodiment is as follows:
1) A river in Huzhou City, Zhejiang Province of China, is turbid with dark yellow color and a few algae after a rainstorm. The fluidity of water body is low, the transparency is 30-40 cm and the turbidity is 65-75 NTU.

Firstly, prepare the compound flocculant for the water body. Perform ultrasonic treatment on the mixed solution of starch, dimethyl diallyl ammonium chloride solution and NaOH (in which the mass ratio of starch is 30%, and the mole percentage of NaOH and dimethyl diallyl ammonium chloride is 1.6:1) with 20 kHZ ultrasonic wave for 3-10 min, then mix and stir it evenly with acidified chitosan for complete reaction, and wash with 80% ethanol solution and dry it after keeping it 50-60°C for 30-50 min to obtain the cationic starch flocculant, where the mass ratio of chitosan and starch is 0.005:1; then blend the cationic starch flocculant and the diatomite with a mass ratio of 1.5:1 to get the compound flocculant, then spray it with a dosage of 0.3%. After that, stir the water with a stretched stirring rod at the underwater depth of 30-50 cm at a stirring speed of 1000 RPM. The water body will be clarified quickly in 2h. When the water transparency is greater than or equal to 60 cm, the local soil, specifically, the soil of 60 meshes, should be used to overlay the water with a thin layer. After washing, the impurities are removed, and then high-pressure spraying is carried out for underwater overlaying with muddy/water at a volume ratio of 1:25 and with a spraying speed of 550 L/min. The spraying is carried out to install the nozzles underwater for carpet spraying at a forward speed of 14 m/min. The underwater nozzles should be 50 cm away from the bottom.

2) Engraft the submerged plant turf the next day after spraying. Firstly, culture the seedlings of submerged plant such as *Hydrilla verticillata (L.f.) Royle, Myriophyllum verticillatum L.* or *Potamogeton malainus Miq.* in clean water, with water depth of 30-50 cm, transparency of more than 30 cm and temperature of more than or equal to 15°C, directly sow the submerged plant propagules (i.e. rhizomes, seeds or seedlings with spore) on the 3D plant fiber network (the pore size of that is 0.5-1 mm), and fill it with shale particles based on 30% of the filling volume (the particle size is 0.5-2 cm, the true density is 1.5-1.7 g/cm³, the bulk density is 550-600 g/cm³, and the filling thickness is greater than or equal to 2 cm). The three-dimensional network should be installed underwater in a modular manner. After 30 days of culture, transplant the whole plant when the average height is about 22 cm, and fix the planted submerged plant turf to the bottom with timber piles, the height of which should be 30 cm higher than the muddy-water interface. The submerged plant turf should be located at the water area with a transparency of over 50 cm and a depth of 80 cm below the water surface. When the submerged plant turf is laid, its module should be put together based on a unit of 2m×5m to initially form an underwater forest. After 50 days, the submerged plant community in the water can be initially remedied.

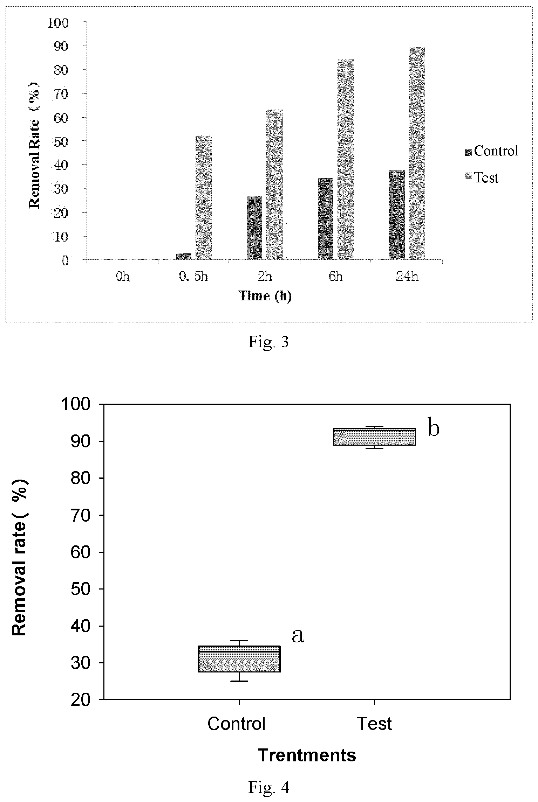

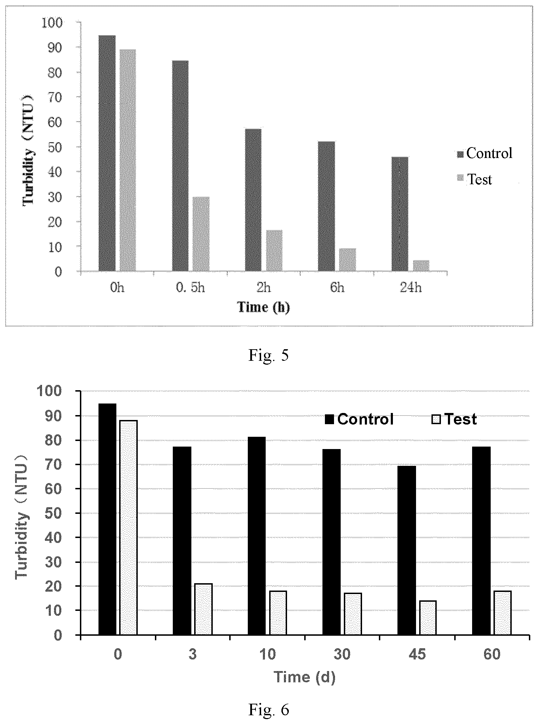

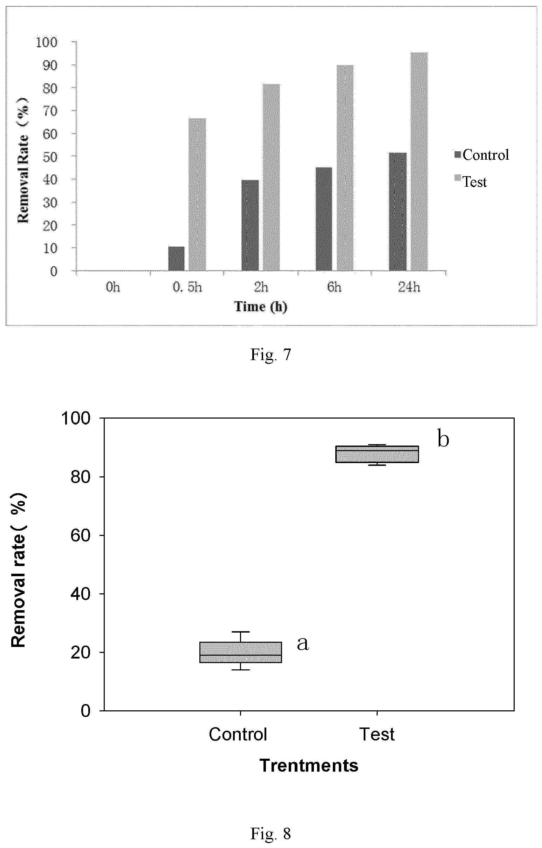

Once the system is stable after running for a period of time, a 60-day continuous monitoring should be carried out towards the water body, as shown in Fig. 3-4. It is shown that the water turbidity decreases significantly and the water transparency is significantly higher than that of the control group; in particular, for the relatively static water area, the removal rate of suspended colloid in the water is 95% on average after stabilization for 24h, as shown in Fig. 5-8. After continuous testing for two months, it is discovered that the submerged plant turf underwater is initially remedied, for the overlaying of aquatic grass is more than 50%, the transparency of the water body is stable at 55 cm on average, and the concentration of suspended matters in the water is less than 18 NTU, meaning that the water quality of the river is significantly improved.

### Embodiment 3

Aiming at improving the high-turbidity water due to the fine particle colloids in water bodies, the technical scheme provided by the Invention adopts field spraying to reduce the concentration of colloidal particles in water bodies, significantly improve water transparency in a short term, and keep a long-term clarification for water bodies by combining with the remediation of submerged plant turf in the later stage.

The embodiment is as follows:
1) A pond in Huzhou City, Zhejiang Province of China, is turbid with light gray color and a few algae. The fluidity of water body is low, the transparency is 20 cm and the turbidity is 55-90 NTU.

Firstly, prepare the compound flocculant for the water body. Perform ultrasonic treatment on the mixed solution of starch, dimethyl diallyl ammonium chloride solution and NaOH (in which the mass ratio of starch is 60%, and the mole percentage of NaOH and dimethyl diallyl ammonium chloride is 1.4:1) with 20 kHZ ultrasonic wave for 3-10 min, then mix and stir it evenly with acidified chitosan for complete reaction, and wash with 80% ethanol solution and dry it after keeping it 50-60°C for 30-50 min to obtain the cationic starch flocculant, where the mass ratio of chitosan and starch is 0.045:1; then blend the cationic starch flocculant and the diatomite with a mass ratio of 1.2 to get the compound flocculant, then spray it with a dosage of 0.5%. After that, stir the water with a stretched stirring rod at the underwater depth of 30-50 cm at a stirring speed of 500 RPM. The water body will be clarified quickly in 2h. When the water transparency is greater than or equal to 60 cm, the local soil, specifically, the soil of 60 meshes, should be used to overlay the water with a thin layer. After washing, the impurities are removed, and then high-pressure spraying is carried out for underwater overlaying with muddy/water at a volume ratio of 1:25 and with a spraying speed of 250 L/min. The spraying is carried out to install the nozzles underwater for carpet spraying at a forward speed of 14 m/min. The underwater nozzles should be 80 cm away from the bottom.

2) Engraft the submerged plant turf the next day after spraying. Firstly, culture the seedlings of submerged plant such as *Potamogeton malainus Miq.* and *Vallisneria Mich. ex L.* and so on in clean water, with water depth of 30-50 cm, transparency of more than 30 cm and temperature of greater than or equal to 15°C, directly sow the submerged plant propagules (i.e. rhizomes, seeds or seedlings with spore) on the 3D plant fiber network (the pore size of that is 0.5-1 mm), and fill it with shale particles at a filling volume radio of 30% (the particle size is 0.5-2 cm, the true density is 1.5-1.7 g/cm³, the bulk density is 550-600 g/cm³, and the filling thickness is greater than or equal to 2 cm). The three-dimensional network should be installed underwater in a modular manner. After 30 days of culture, transplant the whole plant when the average height is about 25 cm, and fix the planted submerged plant turf to the bottom with timber piles, which should be 30 cm above the sediment-water interface. The submerged plant turf should be located at the water area with a transparency of over 50 cm and a depth of 50 cm below the water surface. When the submerged plant turf is installed, the turf modules should be put together based on a unit of 3m×8m to initially form an underwater forest. After 60 days, the submerged plant community in the water can be initially restored.

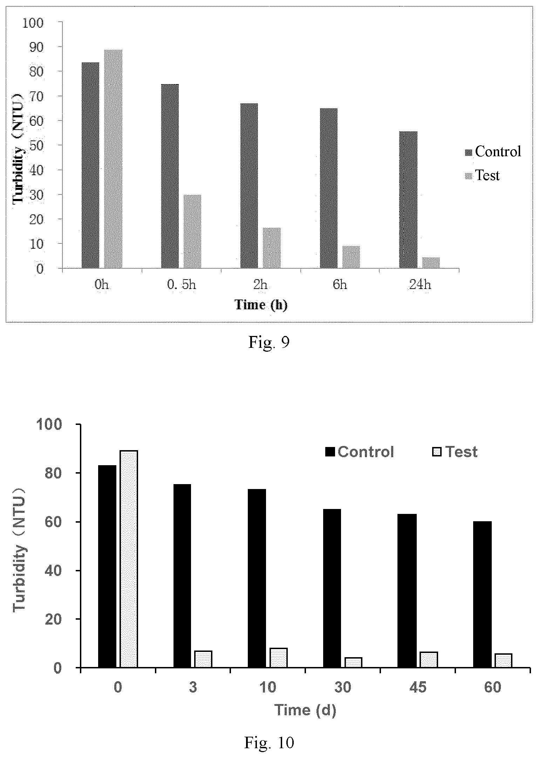

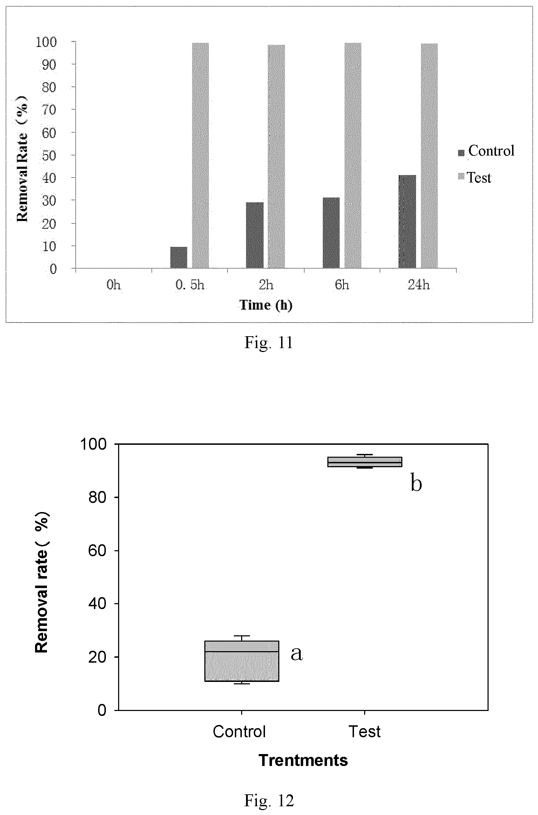

Once the system is stable after running for some time, a 60-day continuous monitoring should be carried out towards the water body, as shown in Fig. 9-12. It is shown that the water turbidity decreases significantly and the water transparency is significantly higher than that of the control group; in particular, for the relatively static water area, the removal rate of suspended colloid in the water is 98% on average after stabilization for 24h, as shown in Fig. 9-12. After continuous monitoring for two months, it is discovered that the submerged plant turf underwater is initially restored, the coverage of aquatic grass is more than 65%, the transparency of the water body is stable at 63 cm on average, and the concentration of suspended matters in the water is less than 22 NTU, meaning that the water quality of the river is significantly improved.

### Embodiment 4

Aiming at improving the high-turbidity water due to the fine particle colloids in water bodies, the technical scheme provided by the Invention adopts field spraying to reduce the concentration of colloidal particles in water bodies, significantly improve water transparency in a short term, and keep a long-term clarification for water bodies by combining with the remediation of submerged plant turf in the later stage.

The embodiment is as follows:
1) A river in Huzhou City, Zhejiang Province of China, is turbid with earth yellow color and a few algae after a rainstorm. The fluidity of water body is low, the transparency is 30 cm and the turbidity is 88-120 NTU.

Firstly, prepare the compound flocculant for the water body. Perform ultrasonic treatment on the mixed solution of starch, dimethyl diallyl ammonium chloride solution and NaOH (in which the mass ratio of starch is 50%, and the mole percentage of NaOH and dimethyl diallyl ammonium chloride is 1.4:1) with 20 kHZ ultrasonic wave for 3-10 min, then mix and stir it evenly with acidified chitosan for complete reaction, and wash with 80% ethanol solution and dry it after keeping it 50-60°C for 30-50 min to obtain the cationic starch flocculant, where the mass ratio of chitosan and starch is 0.015:1; then blend the cationic starch flocculant and the diatomite with a mass ratio of 0.5 to get the compound flocculant, then spray it with a dosage of 0.3%. After that, stir the water with a stretched stirring rod at the underwater depth of 30-50 cm at a stirring speed of 2000 RPM. The water body will be clarified quickly in 2h. When the water transparency is greater than or equal to 60 cm, the local soil, specifically, the soil of 60 meshes, should be used to overlay the water with a thin layer. After washing, the impurities are removed, and then high-pressure spraying is carried out for underwater overlaying with muddy/water at a volume ratio of 1:15 and with a spraying speed of 120 L/min. The spraying is carried out to install the nozzles underwater for carpet spraying at a forward speed of 12 m/min. The underwater nozzles should be 50 cm away from the bottom.

2) Engraft the submerged plant turf the next day after spraying. Firstly, culture the seedlings of submerged plant such as *Hydrilla verticillata (L.f.) Royle* and *Myriophyllum verticillatum L.* and so on in clean water, with water depth of 30-50 cm, transparency of more than 30 cm and temperature of greater than or equal to 15°C, directly sow the submerged plant propagules (i.e. rhizomes, seeds or seedlings with spore) on the 3D plant fiber network, and fill it with shale particles at a filling volume radio of 30%. The three-dimensional network should be installed underwater in a modular manner. After 30 days of culture, transplant the whole plant when the average height is 25 cm, and fix the planted submerged plant turf to the bottom with timber piles, which should be 30 cm higher than the muddy-water interface. The submerged plant turf should be located at the water area with a transparency of over 50 cm and a depth of 80 cm below the water surface. When the submerged plant turf is laid, its module should be put together based on a unit of 2mx5m to initially form an underwater forest. After 60 days, the submerged plant community in the water can be initially restored.

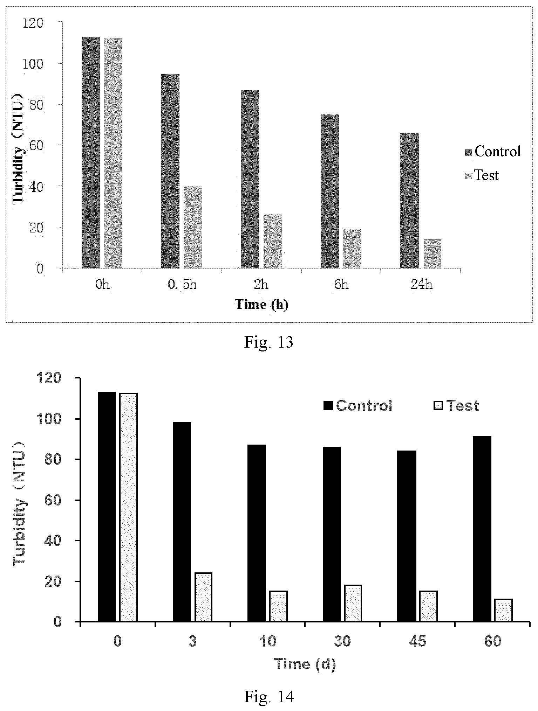

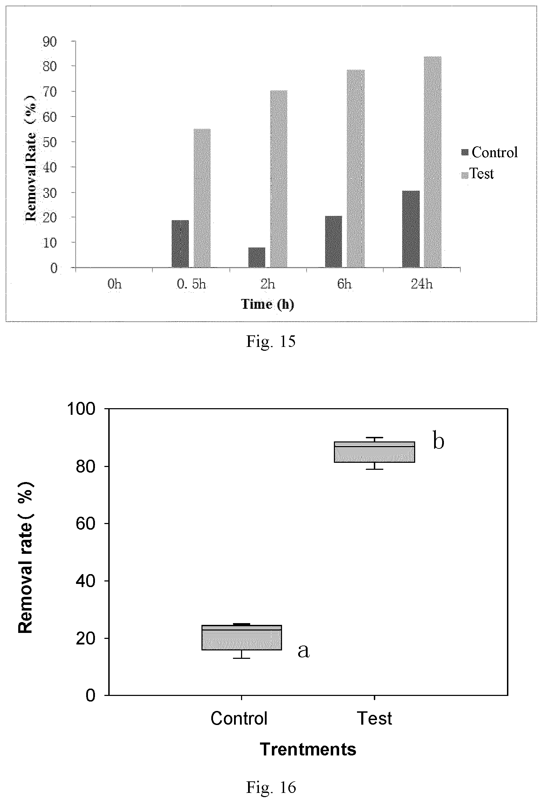

Once the system is stable after running for a period of time, a 60-day continuous monitoring should be carried out towards the water body, as shown in Fig. 13-16. It is shown that the water turbidity decreases significantly and the water transparency is significantly higher than that of the control group; in particular, for the relatively static water area, the removal rate of suspended colloid in the water is 85% on average after stabilization for 24h, as shown in Fig. 13-16. After continuous testing for two months, it is discovered that the submerged plant turf underwater is initially restored, the coverage of aquatic grass is more than 65%, the transparency of the water body is stable at the average of 60 cm, and the concentration of suspended matters in the water is less than 22 NTU, meaning that the water quality of the river is significantly improved.

## Claims

1. An ecological remediation method for water bodies rich in high-turbidity colloidal particles, **characterized by** comprising the following steps:
(1) Preparing composite flocculant by the following method: Performing the ultrasonic treatment on the mixed solution of starch, Dimethyl Diallyl Ammonium Chloride and NaOH, then mixing and stirring it evenly with acidified chitosan to acquire the cationic starch flocculant, and blending the said cationic starch flocculant with diatomite to prepare the said composite flocculant; the mass ratio of cationic starch flocculant and diatomite thereof is 0.5-1.5:1, preferably 0.9-1.2:1;
spreading the composite flocculant on the water surface and stirring it;
(2) When the water transparency is greater than or equal to 60 cm after flocculation and sedimentation, adding clay minerals to the water bodies for formation of a thin overlaying layer;
(3) After formation of a thin overlaying layer, transplanting submerged plant turf as a whole underwater, so as to restore the submerged plant community; wherein the submerged plant turf is grown separately and then transplanted to the water body.

2. The method according to Claim 1, **characterized in that**, in Step (1), the said ultrasonic treatment is performed with 20 kHZ ultrasonic wave for 3-10 min.

3. The method according to Claim 1, **characterized in that**, in Step (1), the mole percentage of NaOH and Dimethyl Diallyl Ammonium Chloride is 1.2-1.6:1.

4. The method according to Claim 1, **characterized in that**, in Step (1), the mass ratio of starch in mixed solution is 30%-60%, preferably 50%.

5. The method according to Claim 1, **characterized in that**, the mixing head of the stretched stirring rod is put underwater at a depth of 30-50 cm, with a stirring rate of 500-2000 RPM, preferably 800-1000 RPM.

6. The method according to Claim 1, **characterized in that**, the clay mineral said in Step (2) is prepared as follows:
Removing the impurities from silty and clay soil in the local farmland and crush that soil, select crushed soil of 40-60 mesh, then removing the suspended impurities after washing, obtaining the soil deposited in the lower layer as the said clay mineral.

7. The method according to Claim 1, **characterized in that**, the method of adding clay minerals to the water bodies said in Step (2) is to take high-pressure spraying of the mixture of the said clay mineral and muddy/water at a volume ratio of 1:8-25, with nozzles installed underwater 50-80 cm away from the bottom for carpet spraying at a forward speed of 8-14 m/min and with the spraying speed of 20-550 L/min.

8. The method according to Claim 1, **characterized in that**, the submerged plant turf said in Step (3) is prepared as follows: directly seeding the propagules of submerged plants on the three-dimensional plant fiber network in the clean water, filling the shale particle fillers on the three-dimensional plant fiber network at a filling volume radio of 30%, and cultivate them for 30 days , wherein depth of the said clean water is 30-50 cm transparency of the said clean water is greater than or equal to 30 cm, and temperature of the said clean water is greater than or equal to 15°C.

9. The method according to Claim 1, **characterized in that**, the said submerged plant is *Hydrilla verticillata (L.f.) Royle, Myriophyllum verticillatum L.* or *Potamogeton malainus Miq.*

10. The method according to Claim 1, **characterized in that**, the particle size of the shale particle fillers is 0.5-2 cm, the true density is 1.5-1.7 g/cm³, the bulk density is 550- 600 g/cm³, and the filling thickness is greater than or equal to 2 cm.

## Patentansprüche

1. Ökologisches Sanierungsverfahren für Gewässer, die reich an kolloidalen Partikeln mit hoher Turbidität, **dadurch gekennzeichnet, dass** das Verfahren die folgenden Schritte umfasst:
(1) Herstellung eines Verbundflockungsmittels nach der folgenden Methode:
Ultraschallbehandlung der gemischten Lösung aus Stärke, Dimethyl-Diallyl-Ammoniumchlorid und NaOH, dann gleichmäßiges Mischen und Rühren mit angesäuertem Chitosan, um das kationische Stärkeflockungsmittel zu erhalten, und Mischen des kationischen Stärkeflockungsmittels mit Kieselgur, um das Verbundflockungsmittel herzustellen; das Massenverhältnis von kationischem Stärkeflockungsmittel und Kieselgur beträgt 0,5-1,5:1, vorzugsweise 0,9-1,2:1;
Verteilen des Verbundflockungsmittels auf der Wasseroberfläche und Umrühren desselben;
(2) Wenn die Wassertransparenz nach Flockung und Sedimentation 60 cm oder mehr beträgt, werden den Gewässern Tonmineralien zur Bildung einer dünnen Deckschicht zugesetzt;
(3) Nach der Bildung einer dünnen Deckschicht wird der untergetauchte Pflanzenrasen als Ganzes unter Wasser verpflanzt, um die untergetauchte Pflanzengemeinschaft wiederherzustellen, wobei der untergetauchte Pflanzenrasen separat gezüchtet und dann in den Wasserkörper verpflanzt wird.

2. Verfahren nach Anspruch 1, **dadurch gekennzeichnet, dass** in Schritt (1) die Ultraschallbehandlung mit 20 kHz Ultraschallwelle für 3-10 min durchgeführt wird.

3. Verfahren nach Anspruch 1, **dadurch gekennzeichnet, dass** in Schritt (1) der Molanteil von NaOH und Dimethyldiallylammoniumchlorid 1,2-1,6:1 beträgt.

4. Verfahren nach Anspruch 1, **dadurch gekennzeichnet, dass** in Schritt (1) das Masseverhältnis von Stärke in gemischter Lösung 30-60%, vorzugsweise 50%, beträgt.

5. Verfahren nach Anspruch 1, **dadurch gekennzeichnet, dass** der Mischkopf des gestreckten Rührstabs in einer Tiefe von 30-50 cm mit einer Rührgeschwindigkeit von 500-2000 U/min, vorzugsweise 800-1000 U/min, unter Wasser gebracht wird.

6. Verfahren nach Anspruch 1, **dadurch gekennzeichnet, dass** das in Schritt (2) genannte Tonmineral wie folgt hergestellt wird:
Entfernen der Verunreinigungen aus schluffigen und lehmigen Böden in dem lokalen Ackerland und Zerkleinern des Bodens, Wählen des zerkleinerten Bodens von 40-60 Mesh, dann Entfernen der schwebenden Verunreinigungen nach dem Waschen, Erhalten des in der unteren Schicht abgelagerten Bodens als das Tonmineral.

7. Verfahren nach Anspruch 1, **dadurch gekennzeichnet, dass** das Verfahren zur Zugabe von Tonmineralien zu den in Schritt (2) genannten Gewässern darin besteht, das Gemisch aus Tonmineralien und Schlamm/Wasser in einem Volumenverhältnis von 1:8-25 mit Hochdruck zu versprühen, wobei die Düsen unter Wasser in einem Abstand von 50-80 cm vom Boden installiert sind, um den Teppich mit einer Vorwärtsgeschwindigkeit von 8-14 m/min und einer Sprühgeschwindigkeit von 20-550 L/min zu besprühen.

8. Verfahren nach Anspruch 1, **dadurch gekennzeichnet, dass** der in Schritt (3) genannte untergetauchte Pflanzenrasen wie folgt hergestellt wird: direktes Aussäen der Vermehrungspflanzen auf dem dreidimensionalen Pflanzenfasernetz im sauberen Wasser, Auffüllen des dreidimensionalen Pflanzenfasernetzes mit Schieferpartikeln mit einer Füllvolumenrate von 30 % und Kultivieren für 30 Tage, wobei die Tiefe des sauberen Wassers 30-50 cm beträgt, die Transparenz des sauberen Wassers grösser oder gleich 30 cm ist und die Temperatur des sauberen Wassers größer oder gleich 15 °C ist.

9. Verfahren nach Anspruch 1, **dadurch gekennzeichnet, dass** es sich bei der Unterwasserpflanze um *Hydrilla verticillata (L.f.) Royle, Myriophyllum verticillatum L.* oder *Potamogeton malainus Miq.*

10. Verfahren nach Anspruch 1, **dadurch gekennzeichnet, dass** die Teilchengröße der Schieferteilchen-Füllstoffe 0,5-2 cm beträgt, die wahre Dichte 1,5-1,7 g/cm³ beträgt, die Schüttdichte 550-600 g/cm³ beträgt und die Fülldicke größer oder gleich 2 cm ist.

## Revendications

1. Procédé d'assainissement écologique pour des masses d'eau riches en particules colloïdales à haute turbidité, **caractérisé en ce qu'**il comprend les étapes suivantes :
(1) Préparation du floculant composite par la méthode suivante : Réalisation d'un traitement par ultrasons sur la solution mélangée d'amidon, de chlorure de diméthyldiallylammonium et de NaOH, puis mélange et agitation de celle-ci de manière régulière avec du chitosane acidifié pour obtenir le floculant d'amidon cationique, et mélange dudit floculant d'amidon cationique avec de la diatomite pour préparer ledit floculant composite ; le rapport massique du floculant d'amidon cationique et de la diatomite est de 0,5-1,5:1, de préférence de 0,9-1,2:1 ;
étaler le floculant composite à la surface de l'eau et le remuer ;
(2) Lorsque la transparence de l'eau est supérieure ou égale à 60 cm après floculation et sédimentation, ajout de minéraux argileux dans les masses d'eau pour la formation d'une fine couche de recouvrement ;
(3) Après la formation d'une fine couche de recouvrement, transplanter le gazon végétal submergé dans son ensemble sous l'eau, de manière à restaurer la communauté végétale submergée ; dans lequel le gazon végétal submergé est cultivé séparément puis transplanté dans le plan d'eau.

2. Procédé selon la revendication 1, **caractérisé en ce que**, à l'étape (1), ledit traitement par ultrasons est effectué avec une onde ultrasonore de 20 kHZ pendant 3-10 min.

3. Procédé selon la revendication 1, **caractérisé en ce que**, dans l'étape (1), le pourcentage molaire de NaOH et de Chlorure de Diméthyl Diallyl Ammonium est de 1,2-1,6:1.

4. Procédé selon la revendication 1, **caractérisé en ce que**, à l'étape (1), le rapport massique de l'amidon dans la solution mélangée est de 30%-60%, de préférence 50%.

5. Procédé selon la revendication 1, **caractérisé en ce que** la tête de mélange de la tige d'agitation étirée est immergée à une profondeur de 30-50 cm, avec une vitesse d'agitation de 500-2000 RPM, de préférence 800-1000 RPM.

6. Procédé selon la revendication 1, **caractérisé en ce que**, le minéral argileux dit à l'étape (2) est préparé comme suit :
Enlever les impuretés du sol limoneux et argileux dans les terres agricoles locales et broyer ce sol, sélectionner le sol broyé de 40-60 mesh, puis enlever les impuretés en suspension après lavage, obtenir le sol déposé dans la couche inférieure comme ledit minéral argileux.

7. Procédé selon la revendication 1, **caractérisé en ce que**, le procédé d'ajout de minéraux argileux aux plans d'eau dit à l'étape (2) consiste à effectuer une pulvérisation à haute pression du mélange dudit minéral argileux et de l'eau boueuse à un rapport volumique de 1:8-25, avec des buses installées sous l'eau à une distance de 50-80 cm du fond pour une pulvérisation sur tapis à une vitesse d'avancement de 8-14 m/min et avec la vitesse de pulvérisation de 20-550 L/min.

8. Procédé selon la revendication 1, **caractérisé en ce que** le gazon de plantes submergées dit à l'étape (3) est préparé comme suit : ensemencer directement les propagules de plantes submergées sur le réseau de fibres végétales tridimensionnelles dans l'eau propre, remplir les charges de particules de schiste sur le réseau de fibres végétales tridimensionnelles à une radio de volume de remplissage de 30%, et les cultiver pendant 30 jours, dans lequel la profondeur de ladite eau propre est de 30-50 cm, la transparence de ladite eau propre est supérieure ou égale à 30 cm, et la température de ladite eau propre est supérieure ou égale à 15°C.

9. Procédé selon la revendication 1, **caractérisé en ce que** ladite plante submergée est *Hydrilla verticillata (L.f.) Royle, Myriophyllum verticillatum L.* ou *Potamogeton malainus Miq.*

10. Procédé selon la revendication 1, **caractérisé en ce que** la taille des particules de remplissage en schiste est de 0,5-2 cm, la densité réelle est de 1,5-1,7 g/cm³ , la densité apparente est de 550-600 g/cm³ , et l'épaisseur de remplissage est supérieure ou égale à 2 cm.
